Europäisches Patentamt

European Patent Office

Office européen des brevets

(19)

(11) Veröffentlichungsnummer: **0 451 549 A2**

(12) **EUROPÄISCHE PATENTANMELDUNG**

(21) Anmeldenummer: 91104196.0

(22) Anmeldetag: **19.03.91**

(51) Int. Cl.5: **G02B 6/28**, B29D 11/00, B29C 45/00

(30) Priorität: **23.03.90 DE 4009332**

(43) Veröffentlichungstag der Anmeldung:
**16.10.91 Patentblatt 91/42**

(84) Benannte Vertragsstaaten:
**AT BE CH DE DK ES FR GB GR IT LI LU NL SE**

(71) Anmelder: **HOECHST AKTIENGESELLSCHAFT**
**Postfach 80 03 20**
**W-6230 Frankfurt am Main 80(DE)**

(72) Erfinder: **Groh, Werner, Dr.**

**Dieulefiter Strasse 7**
**W-6302 Lich(DE)**
Erfinder: **Brockmeyer, Andreas, Dr.**
**Wachenheimer Strasse 58**
**W-6237 Liederbach(DE)**
Erfinder: **Theis, Jürgen, Dr.**
**Weisskirchner Strasse 47**
**W-6370 Oberursel(DE)**
Erfinder: **Stehlin, Thomas, Dr.**
**Turnerstrasse 69**
**W-6900 Heidelberg(DE)**

(54) **Verfahren zur Herstellung von optischen Kopplern aus Polymeren.**

(57) Verfahren zur Herstellung von optischen Kopplern aus Polymeren, wobei die Kopplerstruktur mit Hilfe eines Spritzgußverfahrens hergestellt wird und als Polymere vorzugsweise amorphe Polymere, insbesonder PMMA, Polystyrole, Polycarbonate, Polyolefine, Polyester, Polysulfone, Polyethersulfone, Polyetherimide, Polyarylate, Polyamide oder Polyestercarbonate eingesetzt werden. Das Kopplerelement ist massiv und kann mit einem Polymeren beschichtet sein, welches einen niedrigeren Brechungsindex als der Koppler besitzt, so daß die Umleitung im Koppler selbst stattfindet.

Fig. 1

EP 0 451 549 A2

Die Erfindung bezieht sich auf ein Verfahren zur Herstellung von optischen Kopplern aus Polymeren.

In passiven Lichtwellenleiternetzen dienen Koppler als optische Bauelemente zum Aufteilen der Lichtsignale von ankommenden Lichtwellenleitern auf abgehende Lichtwellenleiter. Derartige Koppler bestehen aus einem transparenten Körper, welcher an der Lichteintritts- und an der Lichtaustrittsseite mit Lichtwellenleitern verbunden ist. Neben den Kopplern, die durch Zusammenkleben oder Zusammenschmelzen von transparenten Formkörpern mit Lichtwellenleitern entstehen, sind auch Koppler bekannt, zu deren Herstellung Lichtwellenleiterbündel verdrillt und an der Verdrillstelle verstreckt werden (Agarwal, Fiber Integr. Optics 6 (1), 27 - 53, 1987).

Die Herstellung derartiger zusammengesetzter Koppler ist jedoch aufwendig und teuer; hinzu kommt noch, daß die Durchgangsdämpfung solcher bekannten Koppler schwer reproduzierbar ist, so daß die Leistung zwischen den verschiedenen Ausgangsfasern um mehr als 1 dB schwankt.

Weiterhin sind Koppler bekannt, bei denen Faserbündel aus Polymer-Lichtwellenleitern mittels eines Schrumpfschlauchs verschmolzen (DE-A-37 37 930) oder Lichtwellenleiter an die Stirnflächen eines zylindrischen Mischbereiches angesetzt werden (R. D. Codd, SAE/IEEE, Internat. Congress of Transportation Electonics, 1984).

Ein Verfahren zum Verformen eines Lichtwellenleiter-Bündels, durch Einpressen eines Stempels wird in der nicht vorveröffentlichten DE-A-39 19 263 beschrieben. Die Aufheizung der Form und des Stempels kann hierbei beispielsweise durch Erwärmung in einem Bad erfolgen.

Eine weitere Möglichkeit besteht darin hochfrequente elektromagnetische Strahlung zur direkten Aufheizung der Lichtwellenleiter zu benutzen (DE-A-39 19 263).

Der wesentliche Nachteil aller Herstellungsverfahren besteht in den aufwendigen Prozeßschritten, die, wie z.B. beim Biconical Taper-Verfahren (Agarwal, Fiber Integr. Optics 6 (1), 27 - 53, 1987), entweder nur eine Einzelstückfertigung erlauben, oder eine Fertigungsautomatisierung nur mit teuren Spezialmaschinen ermöglichen.

Ferner weisen derartige Koppler, bei denen die Lichtwellenleiter an den Mischbereich angesetzt sind, grundsätzlich relativ hohe optische Verluste auf, wobei Koppler die nach dem Biconical-Taper-Verfahren hergestellt sind zusätzlich noch mechanisch instabil sind.

Die Aufgabe bestand nun darin, ein Verfahren zu finden, nach welchem man mechanisch robuste Sternkoppler oder T-Koppler (tap) einfach und kostengünstig herstellen kann. Bei diesem Herstellungsprozeß sollte nicht von fertigen Lichtwellenleitern ausgegangen werden, da diese entweder im späteren Mischbereich in einem aufwendigen Schritt vom optischen Mantel befreit werden müssen oder bei denen durch Ansetzen an den Mischbereich von vornherein optische Verluste aufgrund der Packungsdichte auftreten. Ferner entfällt auf diese Weise die erforderliche Vorkonfektionierung, die höhere Kosten verursacht. Das Verfahren sollte außerdem Koppler mit niedrigen Einfügeverlusten und geringen Schwankungen zwischen den einzelnen Ausgangsfasern liefern.

Es wurde nun überraschend gefunden, daß man die oben genannten Anforderungen erfüllen kann, wenn man die Koppler-Struktur (Mischbereich mit Lichtwellenleiter-Enden gleichzeitig) in einem Spritzgießverfahren herstellt.

Optische Koppler die nach dem erfindungsgemäßen Verfahren hergestellt werden zeichnen sich durch eine hohe mechanische Festigkeit, gut reproduzierbare geringe Durchgangsdämpfungen sowie allgemein gute optische Eigenschaften aus. Ein weiterer Vorteil dieses einfachen und kostengünstigen Verfahrens liegt in der Möglichkeit qualitativ hochwertige Kopplersysteme in Massenfertigung herzustellen.

Die Erfindung betrifft somit ein Verfahren zur Herstellung von optischen Kopplern für den Aufbau von Lichtwellenleitersystemen, das dadurch gekennzeichnet ist, daß die Kopplerstruktur mit Hilfe eines Spritzgußverfahrens hergestellt wird, wobei man eine heiße Polymerschmelze in eine vorgefertigte Spritzgußform, welche aus zwei oder auch aus mehreren Teilen bestehen kann, einspritzt, die Schmelze erstarren läßt und anschließend das fertige Kopplerelement (Mischbereich mit Lichtwellenleiterenden) entnimmt.

Für das Spritzgießen von Kopplern geeignet sind prinzipiell alle transparenten Polymere, wobei wegen der optischen Verluste vorzugsweise amorphe Polymere wie z.B. Polymethylmethacrylat (PMMA), Polystyrol, Polycarbonate, Polyolefine, Polyester, Polysulfone, Polyethersulfone, Polyetherimide, Polyarylate, Polyamide oder Polyestercarbonate eingesetzt werden sollten. Verwendbar sind auch Copolymere, z.B. aus Methylmethacrylat und Methacrylsäure-Pentafluor-n-Propylester, oder Polymerblends, z.B. PMMA/Polyvinylidenfluorid.

Es können aber auch teilkristalline Polymere eingesetzt werden, wenn nur geringe Dichteunterschiede zwischen den amorphen und kristallinen Bereichen bestehen, so daß die auftretenden Streuverluste gering sind. Ein Beispiel für ein derartiges geeignetes teilkristallines Polymer ist Poly-4-methylpenten-1. Allgemein ist jedoch darauf zu achten, daß die Molekulargewichte der verwendeten Polymere der Spritzgußverarbeitung angepaßt werden. Viele gängige Polymere, wie z.B. PMMA oder Polycarbonat, werden bereits als

2

spezielle Spritzgußtypen auf dem Markt angeboten.

Das erfindungsgemäße Kopplerelement kann massiv sein und anschließend mit einem Polymer beschichtet werden, welches einen niedrigeren Brechungsindex als der Koppler besitzt, und somit als Mantel dient, wobei die Lichtleitung in dem Kopplerelement selbst stattfindet. Massiv bedeutet in diesem Fall, daß das Kopplerelement keine Hohlräume aufweist und in diesem Fall als Kernmaterial die Aufgabe der Lichtleitung übernimmt. Die Ummantelung erfolgt vorzugsweise durch Eintauchen in ein Bad, das die entsprechende Polymerlösung enthält oder auch durch eine einfache Spritzlackierung. Die Wahl des Mantelmaterials sowie die verwendeten Lösungsmittel hängen von dem für den Koppler eingesetzten Polymeren sowie von der numerischen Apertur der Lichtwellenleiter ab, die an den Koppler angeschlossen werden sollen. Um optische Verluste zu vermeiden, sollten die numerischen Aperturen möglichst übereinstimmen.

In einer weiteren Ausführungsform kann das Kopplerelement mit den von ihm abgehenden Fasern in einem einzigen Schritt spritzgegossen werden. Die Fasern werden bei diesem Verfahren in das Spritzgießwerkzeug eingelegt und mit einem Polymer, welches den gleichen Brechungsindex wie das Kernmaterial der Fasern aufweist, umspritzt.

In einem bevorzugten Fall ist es möglich den optischen Mantel in einem zweiten Schritt durch erneutes Umspritzen des Mischbereichs aufzubringen. Das im ersten Schritt spritzgegossene Kopplerelement mit den damit verbundenen Fasern kann dabei in der Spritzgussform verbleiben, so daß dieses nach weitgehender Aushärtung des Polymeren, welches den Mischbereich bildet, mit einem weiteren Polymeren, welches für den Fall, daß dieses als optischer Mantel dient, einen niedrigeren Brechungsindex als das erste Polymer aufweisen sollte, umspritzt werden kann.

Ebenso kann der erfindungsgemäße Koppler einen kanalförmigen Hohlraum aufweisen, der mit einem höherbrechenden Polymeren ausgefüllt wird, so daß die Lichtleitung in dem Polymeren, welches den Kern bildet stattfindet. Der spritzgegossene Kanal gibt in diesem Fall die Form des Kopplers vor und wirkt gleichzeitig als Mantel.

Die Ausführung der Kanäle (beispielsweise Wahl der Länge, des Durchmessers oder der Querschnittsform) und des Mischbereichs hängt von der späteren Anwendung ab und kann beliebig vorgegeben werden.

So kann es sich z.B. um einen T-Koppler mit symmetrischer oder asymmetrischer Teilung handeln. Eine bevorzugte Ausführungsform stellen auch sogenannte A x B-Sternenkoppler dar, wobei A die Anzahl der Eingänge und B die Anzahl der Ausgänge bezeichnet und A und B vorzugsweise im Bereich von 1 bis 100, insbesondere im Bereich von 1 bis 16 liegen. Es sind aber auch andere Verzweigertypen, wie z.B. N-, M- oder X-Verzweiger durch das erfindungsgemäße Verfahren herstellbar.

Hierunter versteht man Verzweigungselemente für spezielle Anwendungen in der Datenübertragung und der faseroptischen Sensorik.

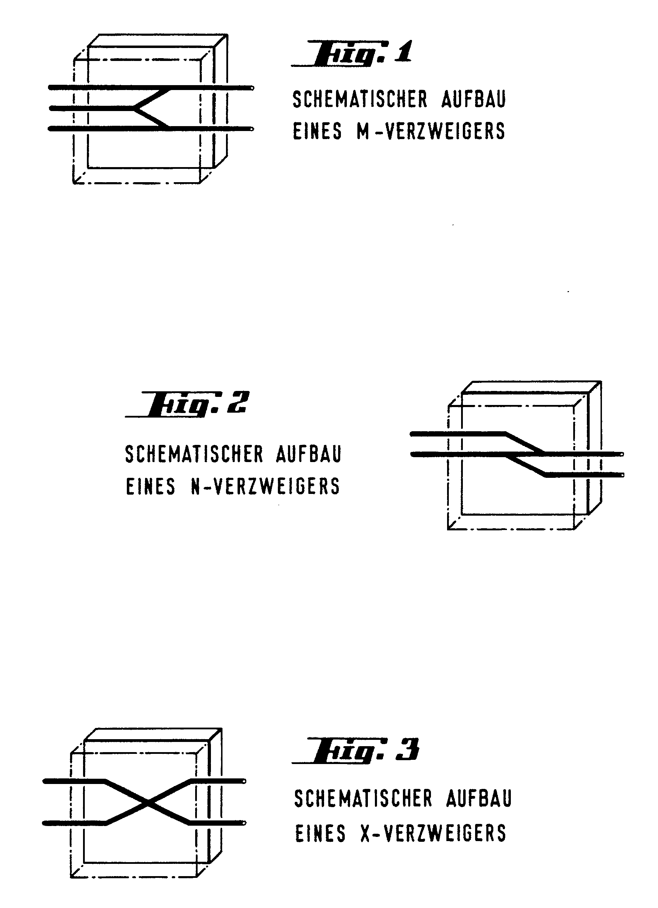

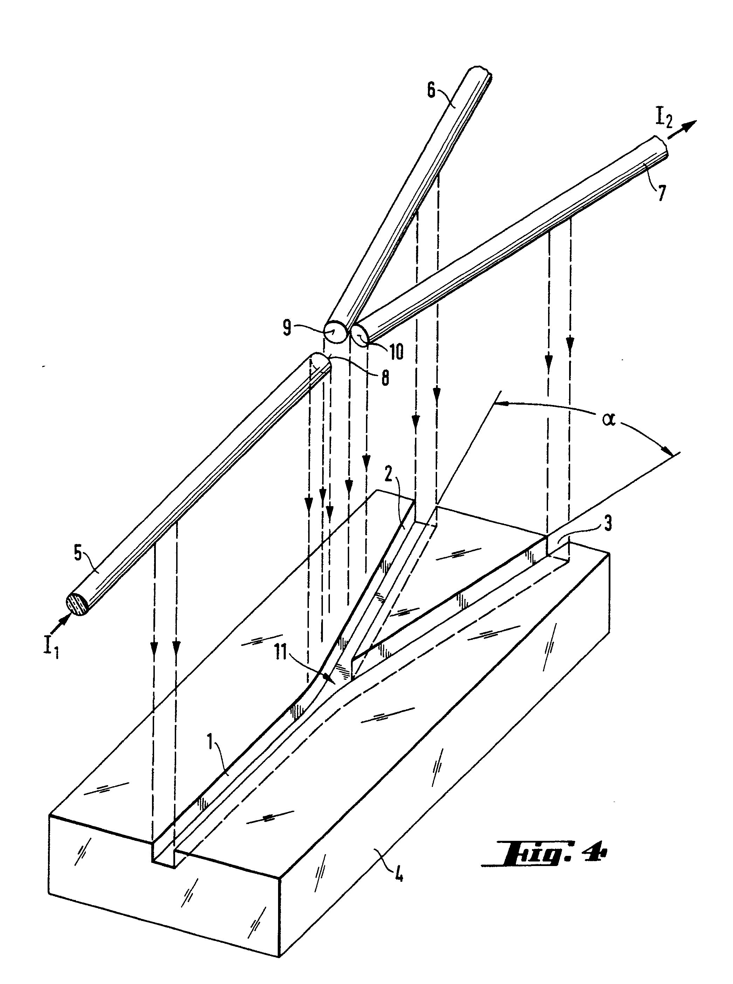

Der prinzipielle Aufbau derartiger Verteiler geht aus den anliegenden Abbildungen hervor (Fig. 1 = M-Verzweiger, Fig. 2 = N-Verzweiger, Fig. 3 = X-Verzweiger).

Die von dem Mischbereich abgehenden Lichtwellenleiter bzw. Lichtwellenleiterkanäle können bei dem erfindungsgemäßen optischen Koppler linear oder gekrümmt sein wobei die Winkel in denen die Lichtwellenleiter bzw. Lichtwellenleiterkanäle aus dem Mischbereich austreten in großen Bereichen variiert werden können.

Die geometrische Form des Mischbereichs ist ebenfalls variabel und wird üblicherweise so bestimmt, daß die optimalen Abmessungen und Winkel unter denen die abgehenden Kanäle laufen vorher experimentell an handgefertigten Kopplern bestimmt werden.

Insbesondere vorteilhaft kann es sein, wenn der Mischbereich eine von der Rechteckform abweichende Geometrie hat, beispielsweise zur Optimierung der Gleichverteilung der Ausgangsintensitäten taillienförmig eingeschnürt oder elliptisch geformt ist, und gegebenenfalls mit einer zackenförmigen Prägung versehen oder aufgerauht ist.

Mittels geeigneter Computerprogramme ist es möglich, die Lichtausbreitung im Koppler zu simulieren und die Geometrie so zu variieren, daß die Excessverluste minimal sind und die Aufteilung des Lichtes auf die Ausgangskanäle möglichst gleichmäßig ist.

Die Länge der Lichtwellenleiter bzw. der Lichtwellenleiterkanäle liegen vorzugsweise im Bereich von 10 bis 150 mm, wobei der Durchmesser 0,1 - 3 mm, bevorzugt 0,4 - 1 mm betragen sollte.

Die Länge des Mischbereichs des erfindungsgemäßen Kopplers sollte zweckmäßigerweise 5 mm nicht unterschreiten und 150 mm nicht überschreiten. Je nach Anwendungsgebiet sind aber auch hier Erweiterungen der Grenzen nach oben oder unten möglich.

Der Querschnitt der von dem Mischbereich abgehenden Lichtwellenleitern kann wie auch die Form des Mischbereichs variiert werden; Der Querschnitt der Lichtwellenleiter, kann allgemein beliebig gewählt werden und ist in bevorzugten Ausführungsformen rund und/oder eckig, sollte aber so gewählt werden, daß die bei der Ankopplung der Lichtwellenleiter an den Mischbereich auftretenden Flächen Verluste minimal sind.

Der spritzgegossene beschichtete Koppler wird an den Enden mit Steckern versehen und in ein Gehäuse eingesetzt an das die Lichtwellenleiter angeschlossen werden. Zur Verbesserung der mechanischen Stabilität des Kopplers kann das Gehäuse mit einem aushärtenden Silikon- oder Acrylatpolymeren ausgegossen werden.

Bei dem erfindungsgemäßen Verfahren wird zunächst ein Werkzeugeinsatz oder eine beliebige Form aus Metall, vorzugsweise Stahl, oder Edelstahl, hergestellt, welche das "Negativ" des zu fertigenden Kopplers darstellt. Formen die sich für das erfindungsgemäße Verfahren eignen müssen mit einer hohen Präzision hergestellt werden und dürfen nur äußerst geringe Oberflächenrauhigkeiten aufweisen. So können die Formen beispielsweise durch das Verfahren der Funken- und Drahterosion, insbesondere aber durch Ausfräsen der Form mit Hilfe einer Computer-Numeric-Controlled (CNC)-Fräsmaschine hergestellt werden, wobei bei beiden Verfahren eine anschließende Polierung der Form folgt. Allgemein sind aber alle Verfahren die eine hohe Präzision gewährleisten anwendbar. Besonders geeignet für die Herstellung von Spritzgußformen sind auch lithographische Methoden, wie z.B. das LIGA-Verfahren der Fa. STEAG/Mikrotechnik.

Die für das erfindungsgemäße Verfahren verwendeten Spritzgußformen bestehen in der Regel aus zwei oder mehr Teilen, wobei zusätzlich noch Vorrichtungen für das Einspritzen der heißen Polymerschmelze vorgesehen sein können.

Der Vorteil des erfindungsgemäßen Verfahrens liegt zum einen in der Möglichkeit qualitativ hochwertige Kopplersysteme in einer Massenproduktion herzustellen, eine gute Reproduzierbarkeit zu gewährleisten und Kopplersysteme mit allgemein guten optischen Eigenschaften zu erhalten. Zum anderen ist es auf diese Weise möglich den Mischbereich mit den daraus austretenden Lichtwellenleitern in einem einzigen Verfahrensschritt auf einfache und kostengünstige Weise herzustellen.

Die erfindungsgemäßen Koppler können beispielsweise in der faseroptischen Sensorik zur Beleuchtung oder Lichtverteilung des von einem Sensor reflektierten Lichtes auf verschiedene spektrale Filter eingesetzt werden und auf diese Weise die Auswertung von Meßsignalen ermöglichen, aber auch zur Beleuchtung eines Gegenstandes von mehreren Seiten unter Einsatz einer einzigen Lichtquelle. Insbesondere eignen sich die beanspruchten optischen Koppler zum Aufbau von Lichtwellenleiternetzen.

Das erfindungsgemäße Verfahren und die damit hergestellten Kopplersysteme sollen an Hand der nachfolgenden Beispiele näher erläutert werden.

**Beispiel 1**

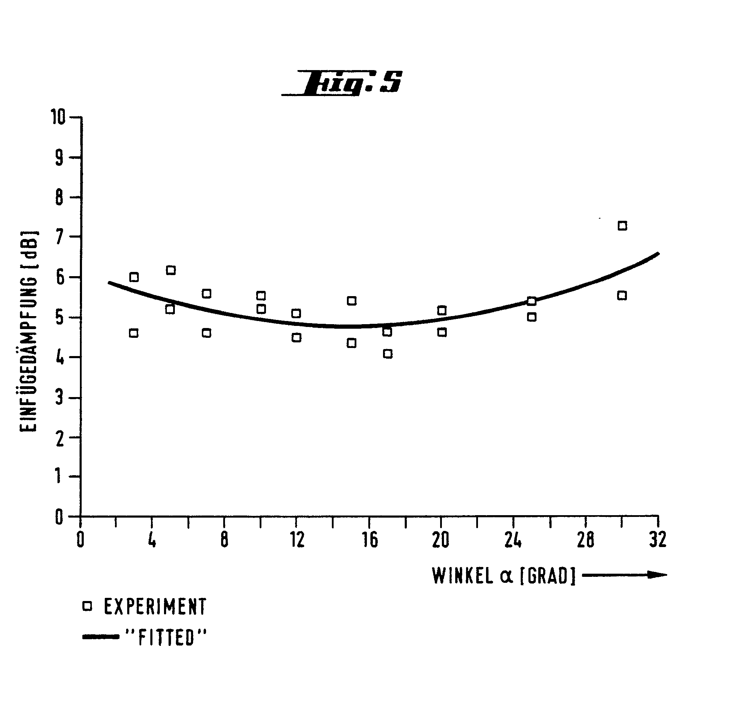

Zur Auslegung der Spritzgußform für einen Y-Koppler wurden zunächst von Hand verschiedene Prototypen hergestellt, um die Geometrie zu optimieren. Der prinzipielle Aufbau eines Y-Kopplers ist in Fig. 4 dargestellt. Fig. 5 zeigt als Ergebnis der Messungen die Abhängigkeit der Einfügedämpfung D vom Winkel $\alpha$.

$$D = - 10 \log \frac{I_2}{I_1}$$

$I_1$ = Eingangsintensität der elektromagnetischen Strahlung

$I_2$ = Ausgangsintensität der elektromagnetischen Strahlung

Der günstigste Winkelbereich liegt bei 10 - 20°. Im vorliegenden Beispiel wurde 15° als Optimalwert angenommen.

Gemäß Fig. 4 wurde mit Hilfe einer CNC-Maschine ein Profil in eine Stahlplatte (4) gefräst, das dem Negativ der Form in Fig. 4 entspricht. Dieses Teil wurde mechanisch nachpoliert und dann als Spritzgußform verwendet, wobei als Gegenstück eine ebene Platte diente, die bei der Entformung weggenommen wurde.

Mit dieser Form wurden PMMA-Plättchen (Plexiglas 6N; Röhm) von 4 mm Dicke, 30 mm Länge und 20 mm Breite hergestellt. Die Kanäle hatten quadratischen Querschnitt mit 1,0 mm Kantelänge. Nach Fertigstellung der Plättchen wurden Polymer-Lichtwellenleiter (5, 6, 7) mit einem Durchmesser von 1,0 mm, deren Enden (8, 9, 10) wegen der benötigten guten optischen Qualität mit einem Mikrotommesser vorher präpariert worden waren, in die Kanäle (1), (2) und (3) relativ nahe an die Koppelstelle (11) eingelegt (Fig.

4

EP 0 451 549 A2

4).

Der Freiraum zwischen den Faserstirnflächen (8, 9, 10) wurde mit einem optisch transparenten Epoxyharz (EPO-TEK 301-2, $n_D$ = 1,564) ausgefüllt. Der Brechungsindex des Harzes wurde so gewählt, daß die Numerische Apertur (NA) des Koppelbereiches (11) mit PMMA als optischer Mantel der NA der in die Nuten (1, 2, 3) eingelegten Polymer-Lichtwellenleiter (5, 6, 7) entsprach.

Zum Schluß wurde ein PMMA-Plättchen als Abdeckung auf den Koppler geklebt.

Die Einfügedämpfung mit der in Kanal (1) befindlichen Faser (5) als Eingang und den in den Kanälen (2) und (3) befindlichen Fasern als Ausgängen betrug 4,7 dB bzw. 4,9 dB. Die Abweichung untereinander betrug damit nur 0,2 dB.

**Beispiel 2**

Analog zu Beispiel 1 wurden gemäß Fig. 4 Plättchen aus einem amorphen Polyolefin (ZEONEX 280; NIPPON ZEON) spritzgegossen. Dieses Material hat einen Brechungsindex von 1,53. Als Harz zum Ausgießen der Kanäle wurde Epoxyharz EPO-TEK 301-2 ($n_D$ = 1,564) eingesetzt. Als Lichtwellenleiter wurden kommerzielle Polycarbonat-Fasern (FUJITSU) verwendet.

Die analog zu Beispiel 1 gemessene Einfügedämpfung betrug 6,2 bzw. 6,3 dB und ist teilweise bedingt durch die geringere Numerische Apertur von Plättchen und Epoxyharz gegenüber der Polycarbonat-Faser.

Der Vorteil dieses Kopplers bestand jedoch in der höheren Temperaturbeständigkeit von 120 °C, während der Koppler in Bespiel 1 nur bis 70 °C beständig war.

**Beispiel 3**

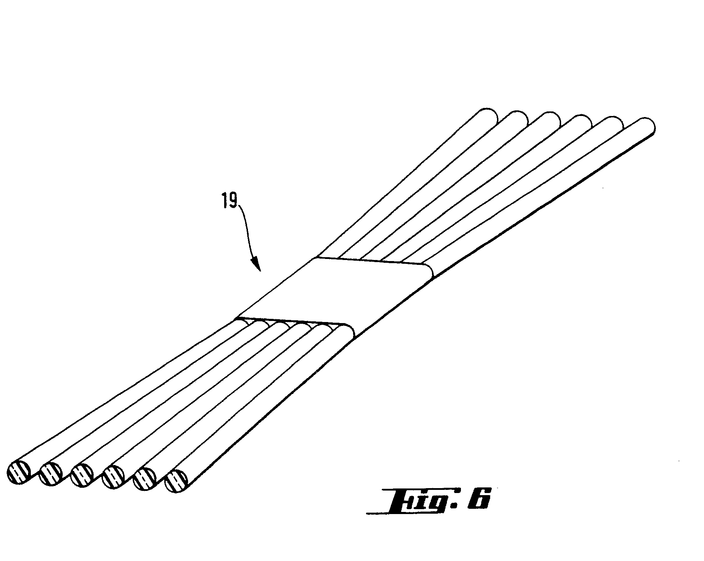

Gemäß Fig. 6 wurde ein 6 x 6 Sternkoppler (19) hergestellt, wobei die Geometrie zuvor über Simulationsrechnungen optimiert wurde. Dabei ergaben sich als günstigste Abmessungen die in Fig. 6 angegebenen Werte.

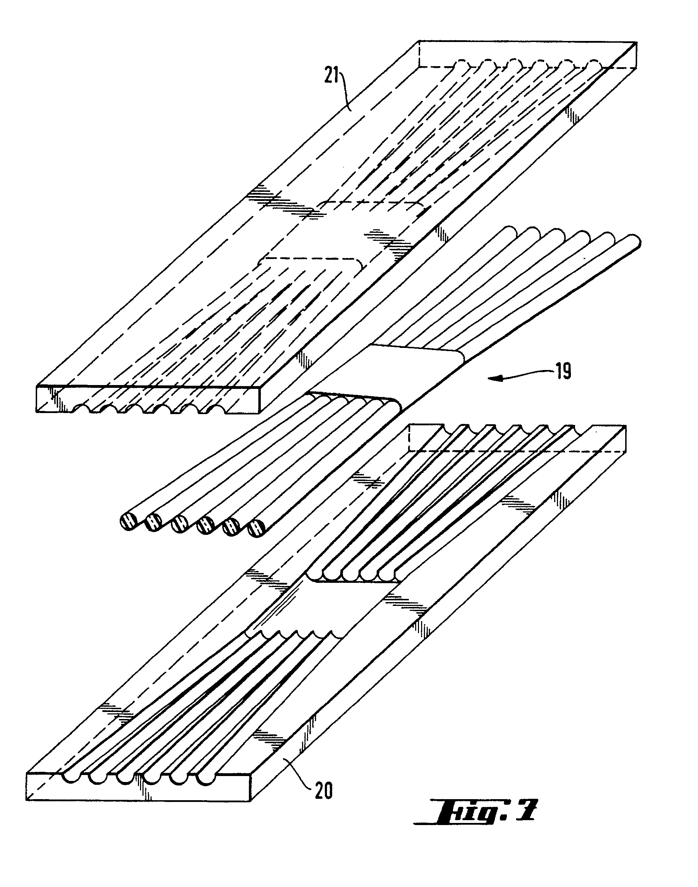

Mit Hilfe der Funkenerosions-Technik wurde die Struktur des Sternkopplers in zwei Stahlplatten (20; 21) eingebracht (Fig. 7).

Nachfolgend wurde die Form poliert. Die beiden Platten bilden die Spritzgußform, in die im geschlossenen Zustand das Polymer eingespritzt wird. Danach werden die beiden Platten geöffnet und der Koppler kann für die weiteren Verarbeitungsschritte entnommen werden.

Im vorliegenden Beispiel wurde als Polymer ein Polycarbonat (MAKROLON CD 2000; BAYER) verwendet, das bei einer Schmelztemperatur von 300 °C in die auf 80 °C vorgeheizte Form von der Mitte des Kopplers her eingespritzt wurde.

Das fertige Bauteil wurde aus der Form entnommen und zur Relaxation von Spannungen 10 Stunden bei 100 °C getempert. Danach wurde ein optischer Mantel aufgebracht, indem das Teil in ein Gefäß mit einem Epoxyd-Klarlack (SICRALAN SL 1000; Gesellschaft für Oberflächentechnik) eingetaucht wurde. Die Härtung des Lacks erfolgte 45 min bei 120 °C.

Der Lack hat einen Brechungsindex von 1,52 und eine Temperaturbeständigkeit von 180 °C.

Der Koppler wurde in ein vorgefertigtes Gehäuse eingesetzt und an den Enden mit Lichtwellenleiter-Steckern versehen.

Zum Schutz vor mechanischen Einflüssen wurde das Gehäuse mit einem Silikonkautschuk (SilGel 604; WACKER) ausgegossen.

Die Einfügedämpfung, gemittelt über alle Ein- und Ausgangskanäle, lag bei 14,5 dB, woraus sich ein Excessverlust von 4 - 5 dB errechnet.

Der Koppler zeichnete sich durch eine hohe Temperaturbeständigkeit von 120 °C aus.

**Beispiel 4**

Analog zu Beispiel 3 wurde anstelle von Polycarbonat ein Polyarylat (DUREL; HOECHST CELANESE) verwendet. Die Schmelztemperatur betrug 315 °C. Lackierung und Konfektionierung erfolgten analog zu Beispiel 3.

Die gemessene mittlere Einfügedämpfung des Kopplers lag mit 16 dB etwas höher als die in Beispiel 3. Dies ist wahrscheinlich darauf zurückzuführen, daß das Polyarylat eine sichtbare Gelbfärbung aufweist, die höhere Absorptionsverluste bewirkt.

**Beispiel 5**

5

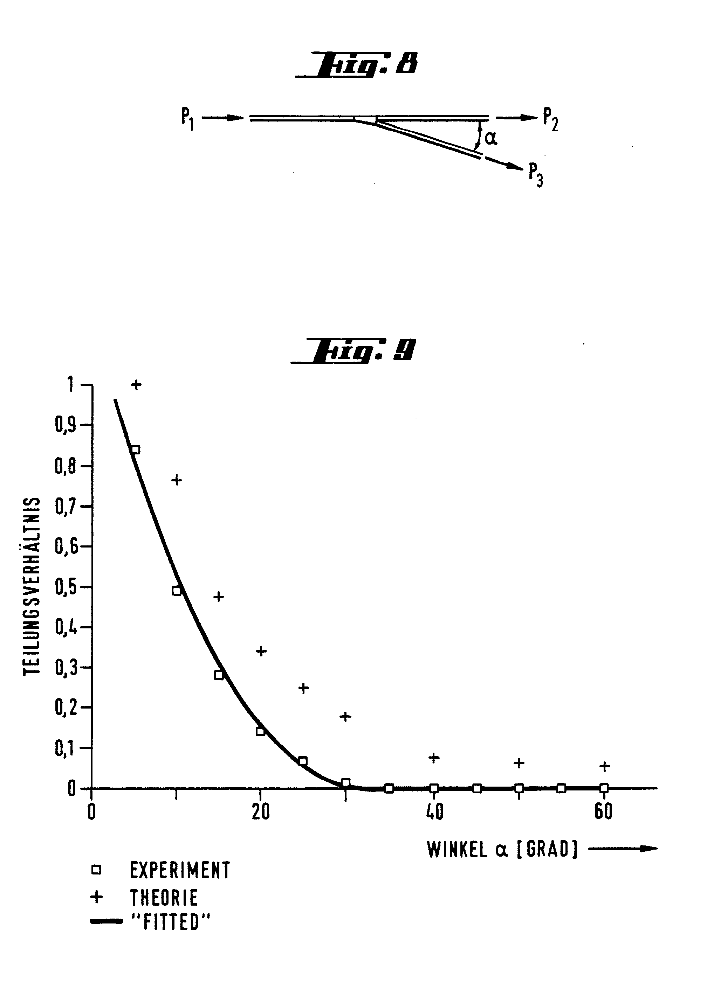

Mit Hilfe des Spritzgußverfahrens wurde ein T-Koppler (tap) mit asymmetrischem Teilungsverhältnis hergestellt. Zur Einstellung des Teilungsverhältnisses gemäß Fig. 8 wird der Winkel $\alpha$ zwischen den beiden Ausgangskanälen verändert.

Simulationsrechnungen und Messungen an hangefertigten Prototypen ergaben die in Fig. 9 dargestellte Abhängigkeit.

Für die Herstellung eines 1:5-Kopplers wurde ein Winkel von 18° gewählt.

Als Spritzgußform diente eine Vorrichtung analog zum Beispiel 1, wobei die Kanäle jetzt eine Breite von 1 mm hatten.

Als Polymer wurde ein Polyethersulfon (ULTRASON E; BASF) verwendet, das bei einer Schmelztemperatur von 350°C in die 100°C heiße Form eingespritzt wurde. Das Polymer hat einen Brechungsindex von 1,65.

Das spritzgegossene Teil wurde zur Relaxation von Spannungen 24 Stunden bei 180°C getempert.

Anschließend wurden in die Kanäle PMMA-Lichtwellenleiter (Asahi TB 1000) mit einer numerischen Apertur von 0,5 eingelegt und die Kanäle mit einem Epoxydharz (EPO-TEK 301-2) ausgegossen. Die numerische Apertur des Verzweigungsbereiches ist mit 0,53 der Apertur der Lichtwellenleiter von 0,50 gut angepaßt.

Als Abdeckung wurde ein Plättchen aus ULTRASON E 1000 verwendet.

Das gemessene Teilungsverhältnis des Kopplers lag bei 1:4.6, die Einfügedämpfung bei 3,3 dB.

## Beispiel 6

Analog zu Beispiel 3 wurde ein (6 x 6)-Sternkoppler hergestellt, wobei nur der Mischbereich gespritzt wurde.

Das Spritzgießwerkzeug von Beispiel 3 wurde so modifiziert, daß auf jeder Seite jeweils 6 Polymerfasern mit einer Länge von 6 cm eingelegt werden konnten. Als Fasern wurden Polycarbonatfasern mit einem Gesamtdurchmesser von 1 mm eingesetzt. In das geschlossene Spritzgießwerkzeug wurden dann diese 12 Polymerfasern mit einem Polymer umspritzt, so daß eine optische Verbindung zwischen den Fasern entstand.

Im vorliegenden Beispiel wurde zur Herstellung des Mischbereichs das Polymer Makrolon CD 2000 (BAYER) verwendet, das bei einer Temperatur von ca. 300°C in das auf ca. 80°C temperierte Werkzeug von der Mitte des Kopplers her eingespritzt wurde.

Nach weitgehender Aushärtung des Mischbereichs wurde erneut ein Polymer eingespritzt und dieser auf diese Weise mit einem optischen Mantel umgeben.

Als Polymer für den optischen Mantel wurde hierfür Polymethylmethacrylat (PMMA/8H; Röhm) auf eine Temperatur von ca. 240°C erhitzt und in das auf ca. 80°C temperierte Werkzeug von der Mitte des Kopplers her eingespritzt.

Der hergestellte (6 x 6)-Sternkoppler mit einem Transmissionsmischer hatte einen Excessverlust von 2,4 dB bei einer Leistungsschwankung zwischen beliebigen Ausgangsfasern von max. 1,6 dB.

## Patentansprüche

1. Verfahren zur Herstellung von optischen Kopplern aus Polymeren, dadurch gekennzeichnet, daß die Kopplerstruktur, mit Hilfe eines Spritzgußverfahrens hergestellt wird.

2. Verfahren nach Anspruch 1, dadurch gekennzeichnet, daß hochtransparente Polymere, vorzugsweise amorphe Polymere, insbesondere PMMA, Polystyrole, Polycarbonate, Polyolefine, Polyester, Polysulfone, Polyethersulfone, Polyetherimide, Polyarylate, Polyamide oder Polyestercarbonate eingesetzt werden.

3. Verfahren nach Anspruch 1, dadurch gekennzeichnet, daß als Polymere Copolymere, beispielsweise Methylmethacrylat und Methacrylsäure-Pentafluor-n-Propylester, oder Polymerblends, beispielsweise Polymethylmethacrylat/Polyvinylidenfluorid oder teilkristalline Polymere, vorzugsweise Poly-4-methylpenten eingesetzt werden.

4. Optischer Koppler bestehend aus einem Mischbereich und Lichtwellenleiterenden, dadurch gekennzeichnet, daß das Kopplerelement nach einem Spritzgußverfahren hergestellt wurde.

5. Optischer Koppler nach Anspruch 4, dadurch gekennzeichnet, daß das Kopplerelement massiv ist und mit einem Polymeren beschichtet wird, welches einen niedrigeren Brechungsindex als der Koppler besitzt und die Lichtleitung in dem Kopplerelement selbst stattfindet.

6. Optischer Koppler nach Anspruch 5, dadurch gekennzeichnet, daß das Kopplerelement mit einem Polymeren, welches einen niedrigeren Brechungsindex als der Koppler aufweist, in einem zweiten Schritt umspritzt wird.

7. Optischer Koppler nach Anspruch 4, dadurch gekennzeichnet, daß das Kopplerelement einen kanalförmigen Hohlraum aufweist, welcher mit einem höherbrechenden Polymeren ausgefüllt wird, in welchem die Lichtleitung erfolgt.

8. Optischer Koppler nach mindestens einem der Ansprüche 4-7, dadurch gekennzeichnet, daß es sich um einen symmetrischen oder asymmetrischen A x B-Sternenkoppler handelt, wobei A die Anzahl der Eingänge und B die Anzahl der Ausgänge bezeichnet, und A und B im Bereich von 1 bis 100, vorzugsweise im Bereich von 1 bis 16 liegen.

9. Optischer Koppler nach mindestens einem der Ansprüche 4-7, dadurch gekennzeichnet, daß es sich um einen symmetrischen oder asymmetrischen T-Koppler handelt.

10. Optischer Koppler nach mindestens einem der Ansprüche 4-7, dadurch gekennzeichnet, daß es sich um einen N-, M- oder X-Verzweiger handelt.

11. Optischer Koppler nach mindestens einem der Ansprüche 4-10, dadurch gekennzeichnet, daß die abgehenden Lichtwellenleiter bzw.- Lichtwellenleiterkanäle linear oder gekrümmt sein können und unter verschiedenen Winkeln vom Mischbereich abgehen können.

12. Optischer Koppler nach mindestens einem der Ansprüche 4-11, dadurch gekennzeichnet, daß der Mischbereich eine von der Rechteckform abweichende Geometrie haben kann, insbesondere taillienförmig eingeschnürt oder elliptisch geformt ist und gegebenenfalls mit einer zackenförmigen Prägung versehen oder aufgerauht sein kann.

13. Optischer Koppler nach mindestens einem der Ansprüche 4-12, dadurch gekennzeichnet, daß die Länge der Lichtwellenleiter bzw. Lichtwellenleiterkanäle, vorzugsweise zwischen 10 und 150 mm und der Durchmesser zwischen 0,1 - 3 mm, insbesondere zwischen 0,4 - 1 mm liegt.

14. Optischer Koppler nach mindestens einem der Ansprüche 4-12, dadurch gekennzeichnet, daß der Mischbereich eine Länge zwischen 5 - 150 mm, vorzugsweise zwischen 10 - 40 mm besitzt.

15. Optischer Koppler nach mindestens einem der Ansprüche 4-13, dadurch gekennzeichnet, daß der Querschnitt der Lichtwellenleiter beliebig, insbesondere rund oder quadratisch sein kann.

16. Optischer Koppler nach mindestens einem der Ansprüche 4-15, dadurch gekennzeichnet, daß das Gehäuse zur Verbesserung der mechanischen Stabilität mit einem aushärtenden Acrylat- oder Silikonpolymeren ausgegossen wurde.

17. Verfahren zur Herstellung eines optischen Kopplers nach mindestens einem der Ansprüche 4-16, dadurch gekennzeichnet, daß dieses Verfahren sich insbesondere zur Massenproduktion von Kopplerelementen eignet.

**Fig. 1**

SCHEMATISCHER AUFBAU
EINES M-VERZWEIGERS

**Fig. 2**

SCHEMATISCHER AUFBAU
EINES N-VERZWEIGERS

**Fig. 3**

SCHEMATISCHER AUFBAU
EINES X-VERZWEIGERS

Fig. 4

Fig. 5

19

Fig. 6

Fig. 7

# *Fig. 8*

# *Fig. 9*